# EUROPEAN PATENT SPECIFICATION

(11) **EP 0 886 466 B1**
(45) Date of publication and mention of the grant of the patent: **22.05.2002**
(21) Application number: 97950493.3
(22) Date of filing: 15.12.1997
(51) Int. Cl.: A01J 5/017

(54) **A CONSTRUCTION INCLUDING AN IMPLEMENT FOR AUTOMATICALLY MILKING ANIMALS**
KONSTRUKTIOM MIT EINEM GERÄT ZUM AUTOMATISCHEN MELKEN VON TIEREN
STRUCTURE COMPRENANT UNE INSTALLATION DE TRAITE AUTOMATIQUE D'ANIMAUX

(30) Priority: 17.12.1996 NL 1004804
(43) Date of publication of application: 30.12.1998
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: NL9700698
(87) International publication number: WO9826649

(56) References cited:
- EP-A- 0 630 557
- EP-A- 0 728 412
- WO-A-96/01041

## Description

The invention relates to a construction including an implement for automatically milking animals, such as cows or goats, the implement comprising a stable or cowshed in which the animals are allowed to walk about freely.

Such constructions are known e.g. from EP-A-0 630 557. The performance of such constructions should however be improved. In this way the production of milk can be increased and the milk price to the customers can be decreased.

The invention aims at a construction of the above-mentioned type that comprises a fully automatic milking system.

Therefore, the invention relates to a construction including an implement for automatically milking animals, such as cows or goats, the implement comprising a stable or cowshed in which the animals are allowed to walk about freely, characterized in that the milking robot comprises at least one robot arm which is provided with a first and a second parallelogram construction that are located in a first plane in the longitudinal direction of the milkbox, as well as a third parallelogram construction that is located in a second plane enclosing an angle with the first plane.

According to a further inventive feature, near each longitudinal side of the milkbox there are disposed two robot arms behind each other. According to again another inventive feature, seen from the front side of the milkbox, the second plane of the third parallelogram construction of a first robot arm encloses an angle between 40° and 50°, preferably of 45°, with the first plane, while the second plane of the third parallelogram construction of a second robot arm encloses an angle between 55° and 65°, preferably of 60°, with the first plane. The mutual difference in oblique position of the third parallelogram constructions of the two robot arms has the advantage that there is created space between the first and the second parallelogram construction of the two robot arms, so that the parallelogram constructions mutually have sufficient freedom of movement.

In accordance with another aspect of the invention, on the third parallelogram construction there is arranged a teat cup carrier carrying a teat cup at its end. According to again another inventive feature, the robot arm comprises a retracting member by means of which the teat cup, when the latter is disconnected from a teat, is retracted to the teat cup carrier.

In order to prevent the teat cups from falling on the ground during disconnection, according to an inventive feature, the teat cups are provided with cables or similar transport means, with the aid of which they are kept in an approximately upwardly orientated position when being moved towards the teat cup carrier and when being disconnected from a teat. According to a further inventive feature, the cable extends substantially in vertical direction and is connected with one end with a cable fastening means which is disposed on the milkbox, while the cable is connected with its other end with a cable fastening means which is disposed near the upper side of the teat cups. According to again another inventive feature, the cable fastening means is disposed near the upper side of the milkbox. According to a further aspect of the invention, the transport means are computer-controlled.

In accordance with an inventive feature, the construction is provided with a robot arm including a detector, such as a laser, for determining the position of the teats of an animal to be milked. According to a further inventive feature, the robot arm including the detector is disposed near one longitudinal side of the milkbox.

In order to enable the automatic connection of the teat cups to the teats, according to again another inventive feature, the robot arms are provided with computer-controlled cylinders or electromotors.

For a better understanding of the invention, reference will now be made to the accompanying drawings, in which:
Figure 1 is a plan view of an implement for automatically milking animals, such as cows or goats;
Figure 2 is a side view of the construction including an implement for automatically milking animals shown in Figure 1;
Figure 3 is a rear view of the construction shown in Figures 1 and 2;
Figure 4 shows a detail of robot arms represented in Figure 3.

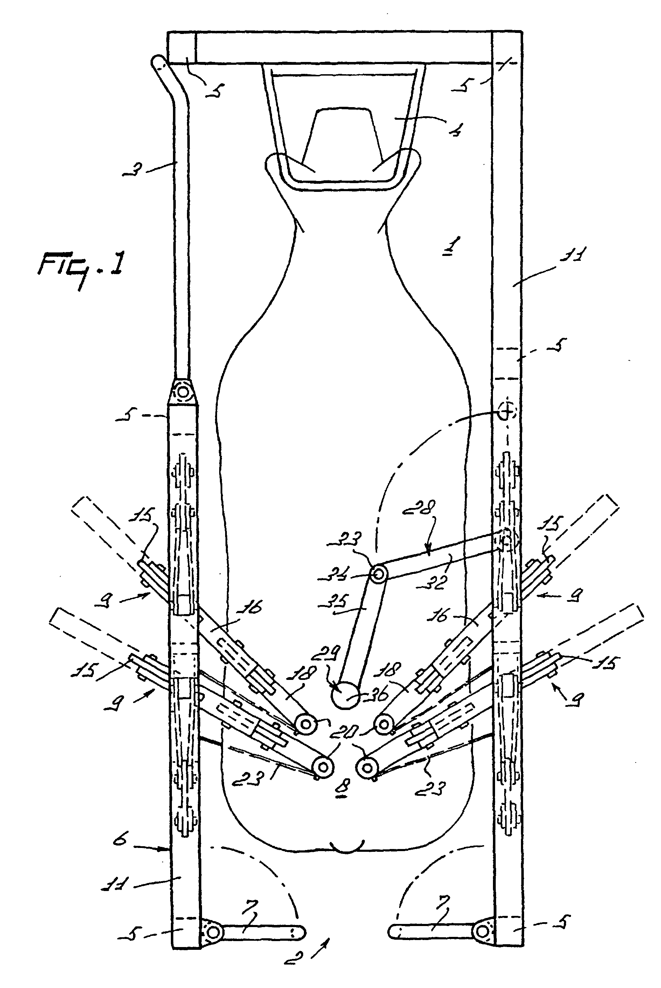

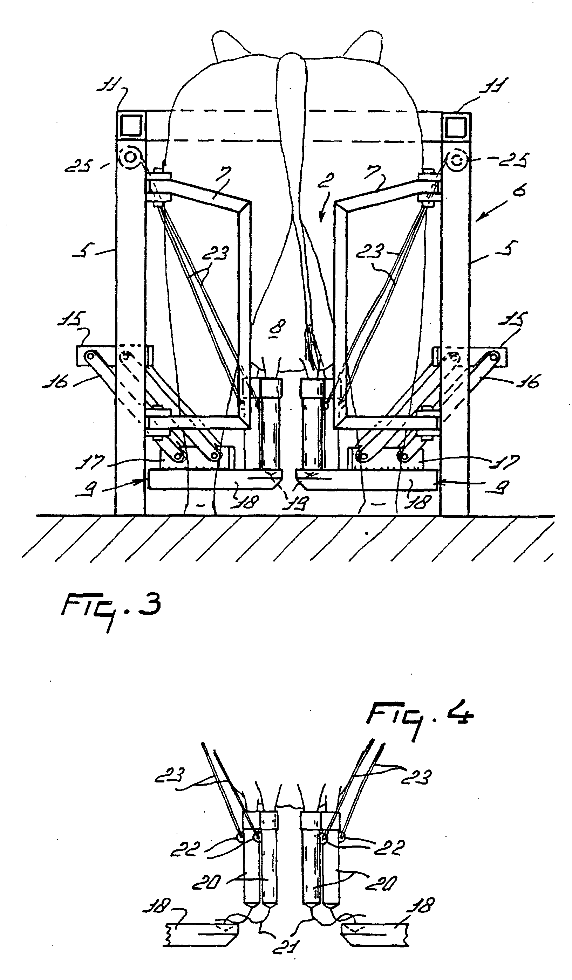

Figure 1 is a plan view of a milkbox 1 which is provided at the rear side with an entrance door 2, via which the animal can enter the milkbox 1, and at a longitudinal side with an exit door 3, via which the animal can leave the milkbox 1. At the front side of the milkbox 1 there is furthermore disposed a feeding trough 4 in which fodder, such as concentrate, can be fed to the animal. As shown in Figure 3, the entrance door 2 comprises two swing doors 7 which are fixed to stands 5 of the frame 6 of the milkbox 1. The swing doors 7, as well as the entrance door 2, are operated automatically by means of a (non-shown) computer.

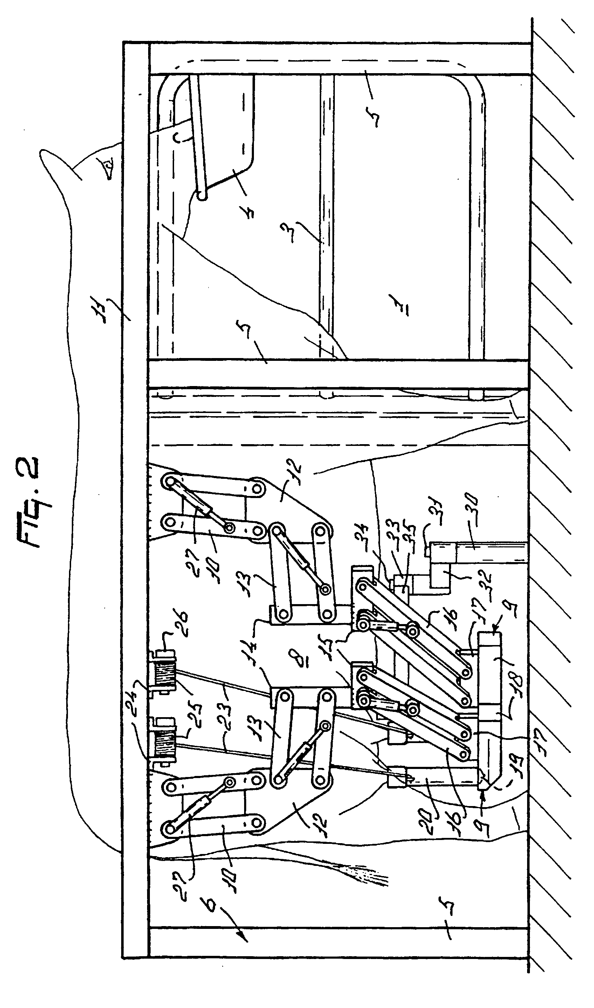

In the milkbox 1 there is additionally provided a milking robot 8 for automatically milking the animals in the milkbox 1. The milking robot 8 comprises four robot arms 9 which are located in pairs behind each other and are disposed on the frame 6 at the longitudinal sides of the milkbox 1. As shown in Figure 2, each of the robot arms 9 is provided with a first parallelogram construction 10 that is attached by means of a lug to the upper beam 11 of the frame 6. The other end of the first parallelogram construction 10 is connected with a triangular plate 12 on which there is disposed a second parallelogram construction 13. The first parallelogram construction 10 and the second parallelogram construction 13 are located in a plane which extends in the longitudinal direction of the milkbox 1 and is located below the upper beam 11. The two second parallelogram constructions 13 of the robot arms 9 which are located behind each other are attached to the triangular plates 12 in such a manner that the two ends of the second parallelogram constructions 13 are facing each other. At the end of the second parallelogram construction 13 there is disposed a downwardly orientated strip 14 which is located in the aforementioned plane in the longitudinal direction of the milkbox 1. On the strip 14 of the leading robot arm 9 there is disposed a horizontal strip 15 which encloses an angle of approximately 45° with the plane in the longitudinal direction of the milkbox 1. The robotarm 9 located therebehind is also provided with a horizontal strip 15 which encloses an angle of approximately 60° with the plane in the longitudinal direction of the milkbox 1. At the other longitudinal side of the milkbox 1 the two robot arms 9 are designed in the same manner. On each of the strips 15 there is furthermore provided a third parallelogram construction 16. The third parallelogram constructions 16 are located in the same planes as the horizontal strips 15. At the end of each of the third parallelogram constructions 16 there is provided a horizontal strip 17 which is connected with a teat cup carrier 18. The teat cup carriers 18 also extend in the same planes as in which the strips 15 are located. Near the end of the teat cup carrier 18 there is disposed a conical seat 19 in which a teat cup 20, including a (non-shown) retracting member, is retained. After the teat cup 20 has been connected to a teat, the retracting member is released, so that the teat cup 20 comes free from the teat cup carrier 18 and is only in connection with the teat cup carrier 18 via a cable 21 (Figure 4). Each of the teat cups 20 is provided near its upper end with a cable fastening means 22 on which there is disposed a further cable 23. The other end of a further cable 23 is connected with a cable fastening means 24 which is disposed at the lower side of the upper beam 11 of the frame. The cable fastening means 24 comprises a reel 25 around which a further cable 23 has been wound. The reel 25 can be driven by means of a stepper motor 26. During disconnection of a teat cup 20 the stepper motor 26 is controlled by the (non-shown) computer in such a manner that, when being moved towards the teat cup carrier 18, the teat cup 20 is kept in an approximately upwardly orientated position. In this way the teat cup 20 is prevented from coming in contact with the floor of the milkbox 1 during disconnection and consequently from being contaminated.

As shown in Figure 2, all the parallelogram constructions are furthermore provided with computer-controlled cylinders 27 by means of which the teat cups 20 are positioned under the teats, whereafter they are connected thereto by an upward movement.

As shown in Figures 1 and 2, the construction according to the invention is additionally provided with a further robot arm 28 including a detector 29 for determining the position of the teats of an animal to be milked. The further robot arm 28 comprises a vertical stand 30 which is disposed on the floor of the milkbox 1 near the longitudinal side thereof. Near its upper side the vertical stand 30 comprises an axis 31 about which a horizontally extending arm 32 of the further robot arm 29 is pivotably arranged. By means of a (non-shown) stepper motor the horizontal arm 32 can be pivoted about the axis 31. Near the other end of the horizontal arm 32 there is disposed a further vertical stand 33 which is also provided at its end with an axis 34. About the axis 34 there is pivotably arranged a further horizontal arm 35. The further horizontal arm 35 can also be pivoted about the axis 34 by means of a (non-shown) stepper motor under control of a computer. At the end of the further horizontal arm 35 there is disposed a laser 36 with the aid of which the position of the teats of an animal to be milked can be determined.

The function of the construction including an implement for automatically milking animals, such as cows or goats, is as follows:

After an animal has been identified by a (non-shown) animal identification system, the computer decides, on the basis of e.g. the estimated milk production, whether the animal is to be milked. If the animal is to be milked, the swing doors 7 are opened automatically, whereafter the animal, lured by concentrate in the feeding trough 4, enters the milkbox 1. The further robot arm 28 including the laser detector 29 is subsequently brought to under the animal, whereafter the position of the teats is determined. By means of the lower cylinders 27 of the third parallelogram construction the teat cup carriers 18 are pivoted from the position represented in dashed lines in Figure 1 to under the udder of the animal. With the aid of the other cylinders of the first and the second parallelogram construction 10, 13, the teat cups 20 are positioned under the teats, whereafter, by operating the cylinder 27 of the second parallelogram construction, they are connected to the teats of an animal to be milked. After the teat cups 20 have been connected to the teats of the animal, the (non-shown) retracting members are released and the teat cup carriers 18 are pivoted downwardly, so that the teat cups 20 will be in a suspended position free from the teat cup carriers 18. When an udder quarter has been milked out, the relevant retracting member is activated, so that the teat cup 20 is moved in the direction of the conical seat 19 of the teat cup carrier 18. At the same time the further cable 23 of a transport means is kept tight by the stepper motor 26, so that the teat cup 20, during disconnection, is kept in an upwardly orientated position. After all the teat cups 20 have been disconnected, the exit door 3 is opened by means of the computer, whereafter the animal can leave the milkbox 1.

## Claims

1. A construction including an implement for automatically milking animals, such as cows or goats, the implement comprising a stable or cowshed in which the animals are allowed to walk about freely, whereby a milking robot (8) comprises at least one robot arm (9) **characterized in that** the robot arm (9) is provided with a first and a second parallelogram construction (10, 13) that are located in a first plane in the longitudinal direction of a milkbox (1), as well as a third parallelogram construction (16) that is located in a second plane enclosing an angle with the first plane.

2. A construction as claimed in claim 1, **characterized in that** near each longitudinal side of the milkbox (1) there are disposed two robot arms (9) behind each other.

3. A construction as claimed in claims 1 or 2, **characterized in that**, seen from the front side of the milkbox (1), the second plane of the third parallelogram construction (16) of a first robot arm (9) encloses an angle between 40° and 50°, preferably of 45°, with the first plane, while the second plane of the third parallelogram construction (16) of a second robot arm (9) encloses an angle between 55° and 65°, preferably of 60°, with the first plane.

4. A construction as claimed in claim 1, **characterized in that**, seen from the front side of the milkbox (1), the second plane of the third parallelogram construction (16) of a first robot arm (9) encloses an angle between 40° and 50°, preferably of 45°, with the first plane, while the second plane of the third parallelogram construction (16) of a second robot arm (9) encloses an angle between 55° and 65°, preferably of 60°, with the first plane.

5. A construction as claimed in any one of the preceding claims, **characterized in that** on the third parallelogram construction (16) there is arranged a teat cup carrier (18) carrying a teat cup (20) at its end.

6. A construction as claimed in claim 5, **characterized in that** the robot arm (9) comprises a retracting member by means of which the teat cup (20), when the latter is disconnected from a teat, is retracted to the teat cup carrier.

7. A construction as claimed in claim 5 or 6, **characterized in that** the teat cup (20) is provided with cables or similar transport means (23), with the aid of which the teat cup (20) is kept in an approximately upwardly orientated position when being moved towards the teat cup carrier (18) and when being disconnected from a teat.

8. A construction as claimed in claim 7, **characterized in that** the cable (23) extends substantially in vertical direction and is connected with one end with a cable fastening means (24) which is disposed on the milkbox (1), while the cable is connected with its other end with a cable fastening means (22) which is disposed near the upper side of the teat cup (20).

9. A construction as claimed in claim 8, **characterized in that** the cable fastening means (24) is disposed near the upper side of the milkbox (1).

10. A construction as claimed in any one of claims 7 - 9, **characterized in that** the transport means are computer-controlled.

11. A construction as claimed in any one of the preceding claims, **characterized in that** the construction is provided with a further robot arm (28) including a detector (29), such as a laser, for determining the position of the teats of an animal to be milked.

12. A construction as claimed in claim 11, **characterized in that** the further robot arm (28) including the detector (29) is disposed near one longitudinal side of the milkbox (1).

13. A construction as claimed in any one of the preceding claims, **characterized in that** the robot arms (9, 28) are provided with computer-controlled cylinders (27) or electromotors.

## Patentansprüche

1. Anlaae mit einer Vorrichtung zum automatischen Melken von Tieren, wie z. B. Kühen oder Ziegen, wobei die Vorrichtung einen Stall oder Kuhstall umfaßt, in dem die Tiere frei umherlaufen können, wobei ein Melkroboter (8) mindestens einen Roboterarm (9) umfaßt,
**dadurch gekennzeichnet, daß** der Roboterarm (9) mit einer ersten und einer zweiten Parallelogrammführung (10, 13) versehen ist, die in einer ersten Ebene in Längsrichtung einer Melkbox (1) angeordnet sind, sowie mit einer dritten Parallelogrammführung (16), die in einer zweiten Ebene angeordnet ist, welche mit der ersten Ebene einen Winkel bildet.

2. Anlage nach Anspruch 1,
**dadurch gekennzeichnet, daß** nahe jeder Längsseite der Melkbox (1) zwei Roboterarme (9) hintereinander angeordnet sind.

3. Anlage nach den Ansprüchen 1 oder 2,
**dadurch gekennzeichnet, daß** von der Vorderseite der Melkbox (1) aus betrachtet die zweite Ebene der dritten Parallelogrammführung (16) eines ersten Roboterarmes (9) mit der ersten Ebene einen Winkel von 40° bis 50°, vorzugsweise von 45° bildet, während die zweite Ebene der dritten Parallelogrammführung (16) eines zweiten Roboterarmes (9) mit der ersten Ebene einen Winkel von 55° bis 65°, vorzugsweise von 60° bildet.

4. Anlage nach Anspruch 1,
**dadurch gekennzeichnet, daß** von der Vorderseite der Melkbox (1) aus betrachtet die zweite Ebene der dritten Parallelogrammführung (16) eines ersten Roboterarmes (9) mit der ersten Ebene einen Winkel von 40° bis 50°, vorzugsweise von 45° bildet, während die zweite Ebene der dritten Parallelogrammführung (16) eines zweiten Roboterarmes (9) mit der ersten Ebene einen Winkel von 55° bis 65°, vorzugsweise von 60° bildet.

5. Anlage nach einem der vorhergehenden Ansprüche,
**dadurch gekennzeichnet, daß** an der dritten Parallelogrammführung (16) ein Zitzenbecherträger (18) angeordnet ist, der an seinem Ende einen Zitzenbecher (20) trägt.

6. Anlage nach Anspruch 5,
**dadurch gekennzeichnet, daß** der Roboterarm (9) ein Rückziehglied umfaßt, mittels dessen der Zitzenbecher (20) beim Trennen von einer Zitze zum Zitzenbecherträaer zurückgezogen wird.

7. Anlage nach Anspruch 5 oder 6,
**dadurch gekennzeichnet, daß** der Zitzenbecher (20) mit Seilen oder ähnlichen Transportmitteln (23) versehen ist, mit deren Hilfe der Zitzenbecher (20) in einer annähernd aufwärts gerichteten Position gehalten wird, wenn er zum Zitzenbecherträger (18) bewegt und wenn er von einer Zitze getrennt wird.

8. Anlage nach Anspruch 7,
**dadurch gekennzeichnet, daß** sich das Seil (23) im wesentlichen in vertikaler Richtung erstreckt und an einem Ende mit einer Seilbefestigungsvorrichtung (24) verbunden ist, die an der Melkbox (1) angeordnet ist, während das Seil an seinem anderen Ende mit einer Seilbefestigungsvorrichtung (22) verbunden ist, die nahe der Oberseite des Zitzenbechers (20) angeordnet ist.

9. Anlage nach Anspruch 8,
**dadurch gekennzeichnet, daß** die Seilbefestigungsvorrichtung (24) nahe der Oberseite der Melkbox (1) angeordnet ist.

10. Anlage nach einem der Ansprüche 7 bis 9,
**dadurch gekennzeichnet, daß** die Transportvorrichtung rechnergesteuert ist.

11. Anlage nach einem der vorhergehenden Ansprüche,
**dadurch gekennzeichnet, daß** die Anlage mit einem weiteren Roboterarm (28) versehen ist, der einen Detektor (29), wie z. B. einen Laser, enthält, um die Position der Zitzen eines zu melkenden Tieres zu ermitteln.

12. Anlage nach Anspruch 11,
**dadurch gekennzeichnet, daß** der den Detektor (29) enthaltende weitere Roboterarm (28) nahe einer Längsseite der Melkbox (1) angeordnet ist.

13. Anlage nach einem der vorhergehenden Ansprüche,
**dadurch gekennzeichnet, daß** die Roboterarme (9, 28) mit rechnergesteuerten Zylindern (27) oder Elektromotoren versehen sind.

## Revendications

1. Structure comprenant un instrument pour traire automatiquement des animaux, tels que des vaches ou des chèvres, l'instrument comprenant une étable dans laquelle les animaux peuvent se déplacer librement, moyennant quoi un robot de traite (8) comprend au moins un bras de robot (9), **caractérisée en ce que** le bras de robot (9) est muni d'une première et d'une deuxième structures en parallélogramme (10, 13) qui se situent dans un premier plan dans la direction longitudinale d'un box de traite (1) ainsi que d'une troisième structure en parallélogramme (16) qui se situe dans un second plan formant un angle avec le premier plan.

2. Structure selon la revendication 1,
**caractérisée en ce que**, à proximité de chaque côté longitudinal du box de traite (1), sont disposés deux bras de robot (9) l'un derrière l'autre.

3. Structure selon la revendication 1 ou 2, **caractérisée en ce que**, vu du côté avant du box de traite (1), le second plan de la troisième structure en parallélogramme (16) du premier bras de robot (9) forme un angle compris entre 40° et 50°, de préférence de 45°, avec le premier plan, tandis que le second plan de la troisième structure en parallélogramme (16) d'un second bras de robot (9) forme un angle compris entre 55° et 65°, de préférence de 60°, avec le premier plan.

4. Structure selon la revendication 1,
**caractérisée en ce que**, vu du côté avant du box de traite (1), le second plan de la troisième structure en parallélogramme (16) d'un premier bras de robot (9) forme un angle compris entre 40° et 50°, de préférence de 45°, avec le premier plan, tandis que le second plan de la troisième structure en parallélogramme (16) d'un second bras de robot (9) forme un angle compris entre 55° et 65°, de préférence de 60°, avec le premier plan.

5. Structure selon l'une quelconque des revendications précédentes, **caractérisée en ce que** sur la troisième structure en parallélogramme (16) est disposé un porteur de gobelet trayeur (18) transportant un gobelet trayeur (20) au niveau de son extrémité.

6. Structure selon la revendication 5,
**caractérisée en ce que** le bras de robot (9) comprend un élément de rétraction au moyen duquel le gobelet trayeur (20), lorsque ce dernier est déconnecté d'un trayon, est rétracté vers le porteur de gobelet trayeur.

7. Structure selon la revendication 5 ou 6,
**caractérisée en ce que** le gobelet trayeur (20) est muni de câbles ou de moyens de transport similaires (23), à l'aide desquels le gobelet trayeur (20) est maintenu dans une position orientée approximativement vers le haut lorsqu'il est déplacé vers le porteur de gobelet trayeur (18) et lorsqu'il est déconnecté d'un trayon.

8. Structure selon la revendication 7,
**caractérisée en ce que** le câble (23) s'étend sensiblement dans une direction verticale et est connecté par une extrémité à des moyens de fixation de câble (24) qui sont disposés sur le box de traite (1), tandis que le câble est connecté par son autre extrémité à des moyens de fixation de câble (22) qui sont disposés à proximité du côté supérieur du gobelet trayeur (20).

9. Structure selon la revendication 8,
**caractérisée en ce que** les moyens de fixation de câble (24) sont disposés à proximité du côté supérieur du box de traite (1).

10. Structure selon l'une quelconque des revendications 7 à 9, **caractérisée en ce que** les moyens de transport sont commandés par ordinateur.

11. Structure selon l'une quelconque des revendications précédentes, **caractérisée en ce que** la structure est munie d'un bras de robot supplémentaire (28) comprenant un détecteur (29), tel qu'un laser, destiné à déterminer la position des trayons d'un animal à traire.

12. Structure selon la revendication 11,
**caractérisée en ce que** le bras de robot supplémentaire (28) comprenant le détecteur (29) est disposé à proximité d'un côté longitudinal du box de traite (1).

13. Structure selon l'une quelconque des revendications précédentes, **caractérisée en ce que** les bras de robot (9, 28) sont munis de cylindres commandés par ordinateur (27) ou de moteurs électriques.
